# EUROPEAN PATENT APPLICATION

(11) **EP 4 711 601 A1**
(43) Date of publication of application: **18.03.2026**
(21) Application number: 24200824.1
(22) Date of filing: 17.09.2024
(51) Int. Cl.: F02D 19/02, F02D 19/06, F02D 41/00, F02M 21/02, F02D 41/38

(54) **SYSTEM AND METHOD FOR OPERATING AND CONTROLLING AN LPG ENGINE WITH LIQUID PHASE DIRECT INJECTION TECHNOLOGY**

(71) Applicant: BeGas Motor SL, 48530 Ortuella, Biskaia (ES)
(72) Inventor: Pous Soria, Antoni, 46022 Valencia (ES); Bilbao Agorria, Eneko, 46022 Valencia (ES); Cabrera Lopez, Pedro, 46022 Valencia (ES)
(74) Representative: DTS Patent- und Rechtsanwälte PartmbB

(57) **Abstract**

A system for operating and controlling an LPG-only engine with Liquid Phase Direct Injection, LPDI. The system (100) comprising the LPG-only engine (1); a fuel tank (2), configured to store LPG in a liquid state; a fuel pump (3), configured to transfer LPG from the fuel tank (2) to at least one pressure rail (4). Wherein the pressure rail (4) is configured to accumulate LPG and provide a constant pressure, comprising an inlet for receiving LPG from the fuel pump (3) and an outlet for returning a portion of unused LPG back to the fuel tank (2). The system (100) further comprising at least one fuel injector (9), configured to inject LPG in liquid form directly from the pressure rail (4) into a respective combustion chamber of the engine (1). The system (100) further comprising an electronic control unit (6), ECU, configured to control the operation of the fuel injector (9) based on operating conditions, at least including the amount of LPG injected and the timing of the injections. The system (100) further comprising a fuel circulation system (7), configured to circulate LPG between the pressure rail (4) and the fuel tank (2), wherein unused liquid LPG returns to the fuel tank (2) for recirculation, wherein the fuel circulation system (7) comprises a pressure regulation element (13) in a return path of the fuel circulation system (7) between the pressure rail (4) and the fuel tank (2). The system (100) further comprising an exhaust gas treatment element (8), configured to treat exhaust gases from the engine (1).

## Description

The present invention relates a system for operating and controlling an LPG-only engine designed for the direct injection of liquefied petroleum gas (LPG) in a liquid state, and a method for operating and controlling an LPG-only engine with Liquid Phase Direct Injection (LPDI).

Liquefied petroleum gas (LPG) is increasingly recognized as a cleaner and more efficient alternative to traditional gasoline and diesel fuels, particularly in regions with stringent emissions standards. However, current LPG injection systems face limitations when converting the fuel into a gaseous state prior to injection, resulting in inefficient combustion, increased fuel consumption, and higher emissions.

There is a need for LPG engines that utilize liquid-phase injection to meet the stringent EURO VI E emissions standards. Existing systems often fail to maintain fuel in its liquid state, particularly in cold conditions, leading to incomplete vaporization and higher emissions. The inefficiencies of current systems result in increased operating costs and environmental impact, failing to capitalize on LPG's potential for reduced emissions.

The present invention addresses these issues by providing an LPG-only engine system with Liquid Phase Direct Injection (LPDI), which keeps the fuel in liquid form until it is directly injected in liquid form into the combustion chamber. This ensures more precise control over fuel delivery, improved combustion efficiency, and compliance with EURO VI E standards, which are among the most stringent regulations for vehicle emissions in Europe.

These objectives are resolved by a system according to independent claim 1 and concerning a method by independent claim 10. Preferred embodiments are addressed by the dependent claims respectively.

The system can operate and control an LPG-only engine with Liquid Phase Direct Injection (LPDI). It can include an LPG-only engine, a fuel tank configured to store LPG in a liquid state, and a fuel pump configured to transfer LPG from the fuel tank to at least one pressure rail. The pressure rail can accumulate LPG and provide a constant pressure. Further the pressure rail and can have an inlet for receiving LPG from the fuel pump and an outlet for returning unused LPG to the fuel tank. The system can include at least one fuel injector, configured to inject LPG in liquid form directly from the pressure rail into a respective combustion chamber of the engine. An electronic control unit (ECU) can control the operation of the fuel injector based on operating conditions. Operating conditions can include the amount of LPG injected and the timing of the injections. The system can also include a fuel circulation system, configured to circulate LPG between the pressure rail and the fuel tank, with unused LPG being returned to the tank. A pressure regulation element can be included in a return path of the fuel circulation system between the pressure rail and the fuel tank. Additionally, an exhaust gas treatment element can be configured to treat exhaust gases from the engine. This system for operating and controlling an LPG-only engine with LPDI has the technical effect of providing precise fuel delivery by maintaining LPG in a liquid state, leading to more efficient combustion and lower emissions. The closed-loop fuel circulation system ensures that unused LPG is recirculated, which enhances fuel efficiency and reduces wastage. The exhaust gas treatment element has the technical effect of further lowering emissions, contributing to compliance with stricter emissions standards.

Within the context of the disclosure, an LPG-only engine can be understood as an internal combustion engine that operates exclusively on liquefied petroleum gas (LPG). This type of engine does not utilize gasoline or diesel. One example could include a combustion engine optimized for the combustion properties of LPG. Another example could be a modified spark ignition engine designed specifically for LPG fuel. Within the context of the invention LPG with at least 90% propane is a high-propane liquefied petroleum gas mixture that consists primarily of propane, making it more volatile and suitable for applications requiring higher vapor pressure. It is commonly used as fuel for heating, cooking, and in vehicles, providing efficient combustion and clean energy. Within the context of the disclosure LPG with at least 90% propane is used as automotive fuel, known as autogas.

Within the context of the disclosure, Liquid Phase Direct Injection (LPDI) can be understood as a system that injects LPG directly into the combustion chamber while it remains in liquid form, rather than converting the fuel to gas before injection. One example of LPDI could be a high-pressure fuel rail system that keeps LPG in liquid form until the moment of injection. Another example could be a system that monitors fuel temperature to prevent the LPG from vaporizing before injection. Another example is a combination of both.

Within the context of the disclosure, a fuel tank can be understood as a reservoir designed to store LPG in a liquid state until it is needed for combustion. One example could be a pressurized steel tank specifically designed to maintain LPG at the required pressure and temperature for liquid storage. Another example could be a composite material tank capable of handling extreme conditions, ensuring the LPG remains in its liquid form.

Within the context of the disclosure, a fuel pump can be understood as a mechanical or electrical device that moves LPG from the fuel tank to the pressure rail. One example could be a high-pressure pump capable of transferring LPG without allowing it to vaporize. Another example could be a multi-stage pump that adjusts its flow rate based on engine demand.

Within the context of the disclosure, a pressure rail can be understood as a component that functions similarly to a common rail system, providing a continuous supply of LPG at high pressure to the fuel injectors. It serves as a fuel distribution manifold, ensuring consistent pressure across all injectors. One example could be a high-pressure tubular rail that stores LPG in liquid form, distributing it to multiple injectors in a controlled manner. Another example could be a modular fuel rail system, which maintains constant pressure through the use of pressure and temperature sensors, ensuring that all injectors receive the required fuel amount without significant pressure fluctuations.

Within the context of the disclosure, constant pressure can be understood as the steady maintenance of a fuel pressure within the system that is high enough to ensure that LPG remains in its liquid state throughout the fuel delivery process. This constant pressure must is at least 5 bar, preferably 5 bar above a vapor pressure to prevent the LPG from vaporizing under normal operating conditions. Withing the context of the disclosure a vapor pressure is the pressure at which LPG changes from liquid phase to gaseous phase which is dependent on the temperature and the composition of LPG itself.

Within the context of the disclosure, an inlet for receiving LPG can be understood as the entry point where LPG from the fuel pump and fuel lines of the fuel circulation system is introduced into the pressure rail fuel accumulator. One example could be a high-pressure fitting that ensures a secure connection between fuel lines of the fuel circulation system and the rail. Another example could be a quick-connect valve designed for high-pressure fuel transfer.

Within the context of the disclosure, an outlet for returning unused LPG can be understood as the exit point of the pressure rail where unused LPG is returned to the fuel tank for recirculation. One example could be a return line of the fuel circulation system integrated into the fuel rail to direct excess LPG back to the tank.

Within the context of the disclosure, at least one fuel injector can be understood as a mechanical device that delivers LPG into the combustion chamber in precisely metered amounts. One example could be a solenoid-driven injector designed to handle liquid LPG at high pressure. Another example could be a piezoelectric injector that ensures precise timing and fuel delivery.

Within the context of the disclosure, a respective combustion chamber of the engine can be understood as the internal space within the engine's cylinder where the air-fuel mixture is ignited and burned. One example could be a standard cylinder head design optimized for LPG combustion. Another example could be a modified combustion chamber that maximizes the efficiency of LPG burning, wherein the cylinder head is bigger than the regular cylinder head of a diesel engine.

Within the context of the disclosure, an electronic control unit (ECU) can be understood as a computerized module that manages and controls various engine functions, including fuel injection. One example of an ECU could be a processor-based system that takes input from sensors throughout the engine to optimize fuel, LPG, delivery. Another example could be a control module that adjusts fuel injector timing and pressure based on environmental and engine operating conditions.

Within the context of the disclosure, operating conditions can be understood as the parameters under which the engine and the fuel injector and pressure rail operate, including but not limited to temperature, pressure, and engine load. One example could be real-time sensor data used to adjust fuel injection timing. Another example could be environmental conditions such as altitude or ambient temperature that influence fuel system performance.

Within the context of the disclosure, a fuel circulation system can be understood as the network of components responsible for moving LPG from the tank to the pressure rail and returning unused fuel to the tank. One example could be a series of high-pressure lines connecting the fuel pump, pressure rail, and tank. Another example could be a pump-driven recirculation system that ensures unused LPG is efficiently returned for future use.

Within the context of the disclosure, a pressure regulator element can be understood as a component that reduces the pressure of LPG before it is returned to the fuel tank and increases the pressure of LPG in fuel lines between the fuel tank, the pressure rail and the pressure regulator element One example could be a pressure regulator that lowers LPG pressure to match the conditions in the fuel tank and on the other side keeps the pressure at minimum 5 bar above vapor pressure.

Within the context of the disclosure, a return path of the fuel circulation system can be understood as the section of the fuel circulation system that returns unused LPG to the fuel tank after it has passed through the injectors. One example could be a return line integrated into the pressure rail at the outlet of the pressure rail.

Within the context of the disclosure, an exhaust gas treatment element can be understood as a component designed to reduce the emission of gases from the engine's exhaust system. One example could be a catalytic converter that reduces nitrogen oxides and carbon monoxide emissions. Another example could be a particulate filter that captures soot and other particulate matter from the engine exhaust. A lambda sensor element can be placed either before, as an upstream lambda sensor element, or after, as a downstream lambda sensor element, the exhaust gas treatment element. It is also possible that the lambda sensor is placed within the same housing of the exhaust gas treatment element, where it again is located either before the catalytic converter (upstream) or after it (downstream). The upstream lambda sensor measures the oxygen content in the exhaust gases. This helps the engine control unit to optimize the air-fuel mixture for combustion. The downstream lambda sensor monitors the efficiency of the catalytic converter by measuring the oxygen levels after the exhaust gases have passed through it.

The system can include a fuel pump that provides a transportation pressure between the fuel tank, the pressure rail, and the pressure regulation element. A return pressure can be provided between the pressure regulation element and the fuel tank. The transportation pressure can be higher than the return pressure, and the return pressure can be higher than the tank pressure. Preferably, the tank pressure is at around vapor pressure of the LPG to keep it in liquid phase. This fuel pump configuration has the technical effect of maintaining consistent fuel pressure throughout the system, ensuring that the transportation of LPG remains stable and efficient. The difference in pressures allows for smooth recirculation of unused LPG, preventing fuel leakage and optimizing the fuel flow in the system.

Within the context of the disclosure, a transportation pressure can be understood as the pressure generated by the fuel pump to move LPG from the fuel tank to the pressure rail and further to the pressure reduction element. One example of this could be a fuel pump operating at high pressure to ensure that LPG stays in liquid form during transport. The transportation pressure depends on the temperature and the composition of the LPG. Preferably, for LPG comprising propane at 90% and higher, the transportation pressure LPG to keep it in a liquid phase is 5 bar above vapor pressure measured in the common rail and on the fuel (LPG) lines before the pressure reduction element. And 1 bar above vapor pressure of LPG after the pressure reduction element and between the fuel tank 2.

Within the context of the disclosure, a return pressure can be understood as the pressure in the system that allows unused LPG to return from the pressure rail to the fuel tank in the part of the fuel circulation system between the pressure regulation element and the fuel tank. This part of the fuel circulation system includes a low-pressure return line designed to handle liquid LPG recirculation to the fuel tank.

3. The system can further comprise at least one fuel injector tube. The fuel injector tube can have a double sided wall. Further, the fuel injector tube can be configured to connect the pressure rail to a combustion chamber inlet of the engine). By having a double sided wall the fuel injector tube is more stable which is important for providing a stable connection between the engine and the pressure rail. Furthermore, the double sided wall provideds a temperature insulation to keep the liquid LPG at a constant temperature which ensures that the engine receives the optimal amount of LPG under varying conditions. That improves engine performance and reduces unnecessary fuel consumption.

The pressure rail can include a pressure sensor, configured to monitor the pressure within the pressure rail. This pressure sensor has the technical effect of ensuring the fuel injection system maintains a consistent and optimal pressure for the delivery of LPG. By continuously monitoring the pressure within the pressure rail, the sensor provides real-time feedback to the ECU, enabling dynamic adjustments to fuel flow and system pressure, which improves engine performance and reduces the risk of fuel system malfunctions.

Within the context of the disclosure, a pressure sensor can be understood as a device that measures the internal pressure of the fuel rail and sends signals to the engine control unit (ECU) to maintain stable pressure. One example of a pressure sensor could be a piezoelectric sensor that detects changes in pressure and sends electrical signals to the ECU. Another example could be a diaphragm-based sensor that provides mechanical feedback to adjust fuel flow accordingly.

The pressure rail can include a temperature sensor, configured to monitor the temperature of the LPG in the pressure rail. This temperature sensor has the technical effect of preventing the LPG from vaporizing prematurely by ensuring the fuel remains within an optimal temperature range while it is temporarily stored in the pressure rail before being injected in liquid form. By monitoring temperature, the sensor allows the system to adjust conditions as needed, ensuring that the LPG is injected in its liquid form, which improves combustion efficiency.

Within the context of the disclosure, a temperature sensor can be understood as a device that detects the temperature of the LPG in the fuel rail and communicates with the ECU to ensure proper fuel injection conditions. One example could be a thermocouple sensor that measures the temperature by detecting changes in voltage caused by temperature differences. Another example could be a resistive temperature detector (RTD) that adjusts its resistance based on the temperature of the LPG in the pressure rail.

The ECU can control the operation of the fuel injector based on operating conditions, which can further include data from the pressure sensor and/or temperature sensor of the pressure rail. This configuration has the technical effect of allowing the ECU to dynamically adjust the fuel injection process based on real-time data from both the pressure and temperature sensors. By using this data, the system ensures that the fuel injection process is optimized for performance and fuel efficiency under varying engine conditions.

Within the context of the disclosure, an electronic control unit (ECU) can be understood as a computerized module that manages and controls various engine functions, including fuel injection. One example of an ECU could be a processor-based system that takes input from sensors throughout the engine to optimize fuel delivery. Another example could be a control module that adjusts fuel injector timing and pressure based on environmental and engine operating conditions.

The fuel pump can operate in variable speed mode to adjust the flow rate of LPG into the pressure rail based on a demand from the engine, and data from the pressure sensor and/or temperature sensor. This fuel pump configuration has the technical effect of adjusting the fuel flow to meet the real-time demands of the engine. By operating in variable speed mode, the fuel pump ensures that the fuel circulation system delivers the precise amount of LPG required under different load conditions, improving fuel efficiency and reducing unnecessary energy consumption.

Within the context of the disclosure, a variable speed mode can be understood as a configuration where the fuel pump adjusts its speed based on the fuel requirements of the engine. One example could be a pump controlled by a variable frequency drive (VFD) that modulates the pump's speed according to sensor input. Another example could be a motor-driven pump that varies its speed based on ECU signals to optimize the flow of LPG to the engine.

The pressure rail can have an elongated form, configured to cover a plurality of fuel injectors. This elongated form of the pressure rail has the technical effect of providing uniform fuel distribution across multiple injectors, ensuring that each injector receives the required amount of LPG. This configuration optimizes the fuel injection process for engines with multiple cylinders, enhancing overall engine performance and efficiency.

Within the context of the disclosure, an elongated form can be understood as a design feature of the pressure rail that extends to cover multiple injectors, allowing for even fuel distribution. One example could be a tubular rail that runs parallel to the engine's cylinder bank, feeding multiple injectors. Another example could be a modular rail system that can be extended or shortened depending on the number of injectors in the engine configuration.

The pressure rail can include at least two pressure rail elements, coupled through a connection element. This configuration has the technical effect of allowing flexibility and scalability in the design of the fuel rail system. By coupling two or more rail elements together, the system can be adapted to engines with varying fuel demands and injector configurations while maintaining consistent fuel pressure across all elements.

Within the context of the disclosure, a connection element can be understood as a mechanical or hydraulic component that links two or more sections of the fuel rail, ensuring continuous fuel flow and pressure regulation. One example could be a threaded coupling that connects two rail sections securely. Another example could be a quick-connect fitting that allows for easy disconnection and reconfiguration of the fuel rail system or a flexible tube.

The method for operating and controlling an LPG-only engine with Liquid Phase Direct Injection (LPDI) can include the steps of providing a fuel circulation system configured to circulate LPG between at least one pressure rail and a fuel tank, with unused LPG returning to the fuel tank for recirculation. The method can further provide a transportation pressure between the fuel tank, the pressure rail, and a pressure regulation element, followed by injecting LPG in liquid form directly from the pressure rail into a combustion chamber of the engine. Additionally, the method can provide a return pressure between the pressure regulation element and the fuel tank, wherein the transportation pressure is higher than the return pressure, and the return pressure is higher than the tank pressure. Preferably, the tank pressure is at around vapor pressure of the LPG to keep it in liquid phase. Preferably, the return pressure is 1 bar above the vapor pressure of LPG. Preferably, the transportation pressure is at minimum 5 bar, preferably at 5 bar, over the vapor pressure of LPG.

This method has the technical effect of ensuring the precise circulation of LPG in a closed-loop system, reducing fuel wastage by recirculating unused LPG back to the fuel tank for future use. The method also optimizes fuel delivery pressure at different points in the system, leading to more efficient fuel injection and combustion. By maintaining higher transportation pressure, the system ensures that LPG is injected in liquid form, while lower return pressure allows unused LPG to return smoothly to the tank without excessive energy loss.

Within the context of the disclosure, recirculation can be understood as the process of returning unused LPG from the pressure rail to the fuel tank for future use, rather than allowing the fuel to be wasted or vented. One example of recirculation could be a system where unused LPG is continuously cycled through the pressure rail and tank, ensuring fuel efficiency. Another example could involve a dual-loop recirculation system where unused LPG is stored temporarily before being returned to the tank.

Further details and advantages of the present invention are explained and described in more detail in the context of the embodiment as illustrated by the enclosed figures.

It is schematically shown:
Fig. 1 schematic illustration of an embodiment of the air cushion loading system; and
Fig. 2 illustrates the method; and
Fig. 3 shows a relationship between temperature and vapor pressure for different compositions of LPG; and
Fig. 4 shows a table with vapor pressure of different propane-butane mixtures at three temperature points.

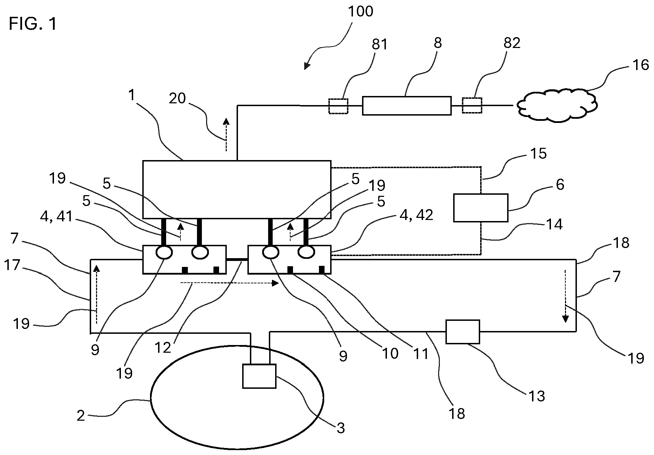

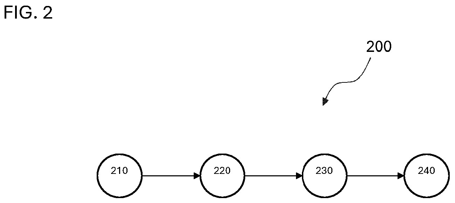

Fig. 1 and Fig. 2 depict a system 100 and a method 200 for operating and controlling an LPG-only engine 1 with Liquid Phase Direct Injection (LPDI), which brings several technical advantages in terms of fuel efficiency, emission reduction, and overall engine performance. The system comprises the LPG-only engine 1, a fuel tank 2 for storing LPG in liquid form, and a fuel pump 3 that transfers LPG from the fuel tank 2 to at least one pressure rail 4. The pressure rail 4 accumulates LPG and maintains constant pressure, with an inlet receiving LPG from the fuel pump 3 and an outlet returning unused LPG to the fuel tank 2 via a pressure regulation element 13, wherein this part of a fuel circulation system 7 is at 5 bar to 6 bar, preferably at 5 bar, over the vapor pressure of LPG to keep LPG in liquid phase. The fuel pump 3 is submerged in the fuel tank 2. This setup ensures precise and stable delivery of liquid LPG for combustion.

At least one fuel injector 9 is connected to the pressure rail 4, injecting LPG in liquid form directly into the combustion chamber of the engine 1. The flow of the liquified LPG in the fuel circulation system 7 and towards the engine 1 is depicted by the arrows 19 whereas the flow of the exhaust after the engine is depicted by the arrow 20 in Fig. 1. The direct injection in liquid phase (LPDI) improves combustion efficiency, as the LPG does not need to be vaporized before entering the engine, leading to a more complete and controlled burn. This results in enhanced engine performance, reduced fuel consumption, and lower emissions.

The system also includes an electronic control unit (ECU) 6, which controls the operation of the fuel injectors 9 based on real-time operating conditions, such as the amount and timing of LPG injections via data lines 14, 15. The data lines 14, 15 in Fig. 1 schematically connect the engine 1 and the pressure rail 41, however all pressure rails 4, 41, 42 are connected via data lines 14, 15 that also supply enough current for operating the fuel injectors 9. The ECU uses data from sensors to optimize fuel injection for various driving conditions, further enhancing efficiency. A fuel circulation system 7 circulates LPG between the pressure rail 4 and the fuel tank 2, returning any unused LPG back to the fuel tank 2 for recirculation. This closed-loop design of the fuel circulation system 7 having a supply line 17 between the fuel tank 2 and the pressure rail 4 and a return path with a return line 18connecting the pressure rail 4 with the pressure regulation element 13 and the fuel tank 2 minimizes fuel waste and ensures that LPG is used efficiently throughout the system. A pressure regulation element 13 is included in the return path, return line 18 of the fuel circulation system 7, helping to regulate pressure levels between the pressure rail 4 and the fuel tank 2. The pressure regulation element 13 keeps the pressure level of LPG in the fuel lines between fuel tank 2, pressure rail 4 and pressure regulation element 13 and in the pressure rail 4 itself at 5 bar over the vapor pressure of LPG. The vapor pressure of LPG depends on temperature and the composition, the mix of at least butane and/or propane, of LPG.

In addition, the system 100 includes an exhaust gas treatment element 8, which treats the exhaust gases produced by the engine 1. In Fig.1 the final exhaust gas 16 is depicted by a schematic cloud. The use of LPG, a cleaner-burning fuel compared to gasoline or diesel, coupled with this treatment element, reduces harmful emissions such as CO2, NOx, and particulate matter, contributing to cleaner exhaust output. A lambda sensor element is placed either before, as an upstream lambda sensor element 81, or after, as a downstream lambda sensor element 82, the exhaust gas treatment element 8. In Fig. 1 the two possible positions are shown by dashed boxes 81, 82. It is also possible, however, not shown in Fig. 1 that the lambda sensor is placed within the same housing of the exhaust gas treatment element 8, where it again is located either before the catalytic converter (upstream) or after it (downstream).

Several sensors and control elements ensure the system operates efficiently. At least one fuel injector 9 regulates the flow of liquid LPG to at least one fuel injector tube 5, a pressure sensor 10 monitors the pressure within the pressure rail 4, and a temperature sensor 11 tracks the LPG temperature in the pressure rail 4. The pressure rail 4 includes at least two pressure rail elements 41, 42, connected via a connection element 12, which helps distribute LPG evenly across multiple fuel injectors 9.

Fig. 2 outlines the method 200 for operating this system. The method involves providing a fuel circulation system 7 that circulates LPG between the pressure rail 4 and the fuel tank 2, ensuring any unused LPG is recirculated to minimize waste. It also includes establishing a transportation pressure between the fuel tank 2, the pressure rail 4, and the pressure regulation element 13. LPG is injected in liquid form directly into the engine's combustion chamber, with a return pressure established between the pressure regulation element 13 and the fuel tank 2. In this method, the transportation pressure is higher than the return pressure, and the return pressure is higher than the tank pressure, which ensures smooth fuel flow and precise control of the injection process.

The system 100 focuses on the LPG-only engine (1) with Liquid Phase Direct Injection (LPDI) technology and incorporates several advanced features. At the core of the system (100) is a pressure rail 4 similar to a Common-Rail System, specifically designed for liquid-phase LPG injection. This system 100 ensures that the LPG is delivered to the fuel injector 9 at high pressure, optimizing the precision of fuel injection. Rather than vaporizing the LPG prior to injection, this system uses Liquid Phase Direct Injection (LPDI), allowing the LPG to be injected directly into the combustion chamber of the engine 1 in liquid form. This approach results in more efficient combustion and improved engine performance.

The fuel circulation system 7 is works like a closed-loop circulation mechanism. Any unused LPG that remains in the pressure rail after the injection process is efficiently recirculated back into the storage tank 2. This closed-loop design reduces fuel waste and ensures optimal utilization of the LPG.

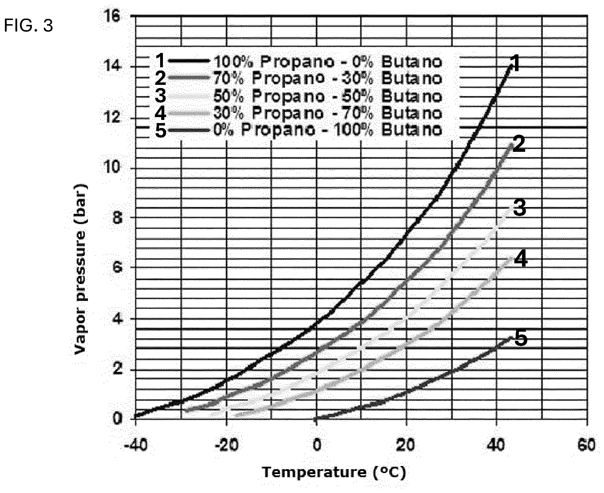

Fig. 3 The graph illustrates the relationship between temperature and vapor pressure for different compositions of LPG, which in this example is a mixture of propane and butane. The x-axis represents the temperature in degrees Celsius (°C), ranging from -40°C to 60°C, while the y-axis represents the vapor pressure in bar, ranging from 0 to 16 bar. The graph shows five different curves, each corresponding to a specific composition of propane and butane. The curve 1, 100% Propane - 0% Butane, shows that pure propane has the highest vapor pressure across all temperatures. For example, at 20°C, propane reaches a vapor pressure of around 8 bar. The curve 2, 70% Propane - 30% Butane, shows a LPG mix with slightly lower vapor pressure than pure propane at any given temperature. For instance, at 20°C, this mixture has a vapor pressure of around 7 bar. The curve 3, 50% Propane - 50% Butane, shows equal proportions of propane and butane. The vapor pressure continues to decrease compared to the mixtures with higher propane content. At 20°C, the vapor pressure is about 6 bar. The curve 4, 30% Propane - 70% Butane, shows a mixture of LPG where the vapor pressure drops further. At 20°C, the vapor pressure is about 5 bar. The curve 5, 0% Propane - 100% Butane, shows a LPG composition with pure butane having the lowest vapor pressure. At 20°C, the vapor pressure is around 3 bar, significantly lower than that of pure propane. For all compositions, as the temperature increases, the vapor pressure also rises. The increase is exponential, meaning the pressure climbs more rapidly at higher temperatures. Propane exhibits a much higher vapor pressure than butane at the same temperature. This indicates that propane is more volatile, requiring higher pressures to remain in liquid form at higher temperatures. As the proportion of butane increases in the mixture, the vapor pressure decreases at all temperature points.

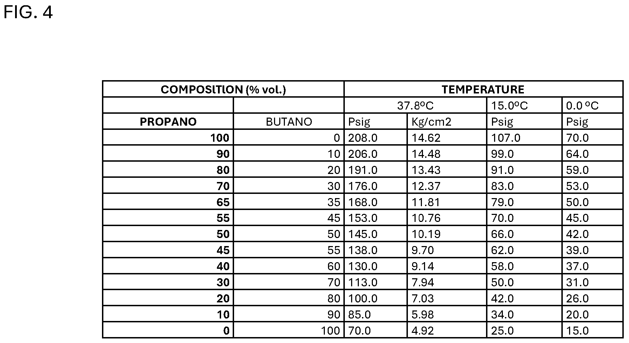

Fig. 4 shows a table providing vapor pressure of different propane-butane mixtures at three temperature points: 37.8°C, 15.0°C, and 0.0°C. The compositions of propane and butane are given in percentage by volume (vol. %), and the pressures are expressed in Psig (pounds per square inch gauge, a unit measuring pressure relative to atmospheric pressure) and kg/cm² (kilograms per square centimeter). For each temperature, the vapor pressure is listed for various compositions of LPG, ranging from 100% propane and 0% butane to 0% propane and 100% butane. As the temperature increases, the vapor pressure increases for all LPG compositions. At higher temperatures (37.8°C), the pressure is significantly higher for all propane-butane mixes compared to lower temperatures (15.0°C and 0.0°C). An LPG mix with 100% propane, at 37.8°C, the pressure is 208 Psig, which is the highest value in the table. At lower temperatures (0°C), the pressure is still high at 70 Psig. An LPG mix with, higher propane Content (90%, 80%), with a slight reduction in propane concentration, the pressure remains close to that of pure propane. At 37.8°C, a 90% propane and 10% butane LPG mix has a pressure of 206 Psig, only slightly lower than 208 Psig for pure propane. An LPG mix with intermediate compositions, 50% propane - 50% butane, the amount of butane increases, the pressure decreases noticeably. At 37.8°C, the pressure for a 50/50 mixture is 145 Psig, which is much lower than for higher propane mixtures. An LPG mix with higher butane content, 30% Propane - 70% Butane, The pressure continues to decrease as the butane content increases. At 37.8°C, a 30% propane mix results in 113 Psig, which is significantly lower than 208 Psig for pure propane. An LPG mix with 100% butane, has the lowest vapor pressure at all temperatures. At 37.8°C, the pressure is 70 Psig, which is much lower than the pressure of any propane-containing mixture. At 0°C, the pressure drops to 15 Psig, indicating butane's relatively low volatility compared to propane. Propane has a much higher vapor pressure than butane at any given temperature. This means propane is more volatile and creates higher pressure in a closed system. As the proportion of butane increases in the mixture, the pressure decreases. The presence of propane in the mixture raises the vapor pressure since propane has a higher volatility than butane. Across all compositions, higher temperatures result in higher pressures due to the increased vaporization of LPG at elevated temperatures. Thus, the table in Fig. 4 illustrates how varying the composition of propane and butane in LPG affects the vapor pressure at different temperatures. Propane is more volatile, leading to higher pressures at all temperatures. As the percentage of butane increases, the vapor pressure decreases. Higher temperatures significantly increase the vapor pressure for both propane and butane, but the effect is more pronounced for propane-rich mixtures.

From a technical perspective, this system provides several notable effects. First, it reduces emissions by using LPG, which burns more cleanly than traditional fossil fuels like gasoline and diesel. This contributes to lower CO2 emissions and minimizes pollutants such as NOx and particulate matter. Furthermore, the system enhances combustion efficiency, as the liquid-phase direct injection of LPG leads to a more complete burn of the fuel, resulting in reduced fuel consumption and overall higher engine efficiency.

The use of LPG also offers cost savings. LPG is generally more affordable than diesel or gasoline, and by integrating this technology, operators can achieve significant long-term savings, particularly in large fleet operations. The system is also highly versatile, offering seamless integration into various types of commercial vehicles, making it a practical solution for urban transport fleets that seek to reduce both emissions and operational costs.

In addition, the system promotes sustainability, as the use of LPG helps reduce the greenhouse effect and supports global efforts to lower greenhouse gas emissions. Overall, this technology provides significant environmental and economic benefits, making it a compelling solution for cleaner and more efficient transport systems of the future.

### REFERENCE SIGNS

- 1: LPG-only engine
- 2: Fuel tank
- 3: Fuel pump
- 4: Pressure rail (common rail)
- 5: Fuel injector tube
- 6: Electronic control unit (ECU)
- 7: Fuel circulation system
- 8: Exhaust gas treatment element
- 81: Upstream lambda sensor element
- 82: Downstream lambda sensor element
- 9: Fuel injector
- 10: Pressure sensor
- 11: Temperature sensor
- 12: Connection element
- 13: Pressure regulation element
- 14, 15: data lines
- 16: final exhaust gas
- 17: supply line
- 18: return line
- 19: flow direction of liquid LPG
- 20: flow direction of gaseous LPG
- 41, 42: at least two pressure rail elements

## Claims

1. A system (100) for operating and controlling an LPG-only engine (1) with Liquid Phase Direct Injection, LPDI, comprising:
- the LPG-only engine (1);
- a fuel tank (2), configured to store LPG in a liquid state;
- a fuel pump (3), configured to transfer LPG from the fuel tank (2) to at least one pressure rail (4);
- wherein the pressure rail (4) is configured to accumulate LPG and provide a constant pressure, comprising an inlet for receiving LPG from the fuel pump (3) and an outlet for returning a portion of unused LPG back to the fuel tank (2);
- at least one fuel injector (9), configured to inject LPG in liquid form directly from the pressure rail (4) into a respective combustion chamber of the engine (1);
- an electronic control unit (6), ECU, configured to control the operation of the fuel injector (9) based on operating conditions, at least including the amount of LPG injected and the timing of the injections;
- a fuel circulation system (7), configured to circulate LPG between the pressure rail (4) and the fuel tank (2), wherein unused liquid LPG returns to the fuel tank (2) for recirculation, comprising a pressure regulation element (13) in a return part of the fuel circulation system (7) between the pressure rail (4) and the fuel tank (2);
- an exhaust gas treatment element (8), configured to treat exhaust gases from the engine (1).

2. The system according to any of the preceding claims, wherein the fuel pump (3) is configured to provide a transportation pressure between the fuel tank (2), the pressure rail (4) and the pressure regulation element (13); and
- a return pressure is provided between the pressure regulation element (13) and the fuel tank (2);
wherein the transportation pressure is higher than the return pressure, and wherein the return pressure is higher than a tank pressure in the fuel tank (2).

3. The system according to any of the preceding claims, further comprising at least one fuel injector tube (5) having a double sided wall and configured to connect the pressure rail (4) to a combustion chamber inlet of the engine (1).

4. The system according to any of the preceding claims, wherein the pressure rail (4) further comprises a pressure sensor (10), configured to monitor a pressure within the pressure rail (4).

5. The system according to any of the preceding claims, wherein the pressure rail (4) further comprises a temperature sensor (11), configured to monitor a temperature of the LPG, in the pressure rail (4).

6. The system according to any of the preceding claims, wherein the ECU (6) is configured to control the operation of the fuel injector (9) further based on operating conditions, comprising data from the pressure sensor (10) and/or temperature sensor (11) of the pressure rail (4).

7. The system according to any of the preceding claims, wherein the fuel pump (3) is configured to operate in a variable speed mode to adjust the flow rate of LPG into the pressure rail (4) based on a demand from the engine (1), and data of the pressure sensor (10) and/or temperature sensor (11).

8. The system according to any of the preceding claims, wherein the pressure rail (4) has an elongated form configured to cover a plurality of fuel injectors (9).

9. The system according to any of the preceding claims, wherein the pressure rail (4) comprises at least two pressure rail elements (41, 42) coupled through a connection element (12).

10. A method (200) for operating and controlling an LPG-only engine (1) with Liquid Phase Direct Injection (LPDI), comprising the steps of:
- providing (210) a fuel circulation system (7), configured to circulate LPG between at least one pressure rail (4) and a fuel tank (2), wherein unused liquid LPG returns to the fuel tank (2) for recirculation;
- providing (220) a transportation pressure between the fuel tank (2), the pressure rail (4) and a pressure regulation element (13);
- injecting (230) LPG in liquid form directly from the pressure rail (4) into a combustion chamber of the engine (1);
- providing (240) a return pressure between the pressure regulation element (13) and the fuel tank (2);
- wherein the transportation pressure is higher than the return pressure, and wherein the return pressure is higher than a tank pressure in the fuel tank (2).
